# FASCICULE DE BREVET EUROPEEN

(11) **EP 3 325 771 B1**
(45) Date de publication et mention de la délivrance du brevet: **28.08.2019**
(21) Numéro de dépôt: 16757292.4
(22) Date de dépôt: 21.07.2016
(51) Int. Cl.: F01D 1/26, B64D 27/14, F01D 7/00, F02K 1/66, F02K 3/072, F02C 3/073, F02K 3/062

(54) **AERONEF COMPORTANT DEUX SOUFFLANTES CONTRAROTATIVES A L'ARRIERE D'UN FUSELAGE AVEC CALAGE DES AUBES DE LA SOUFFLANTE AVAL**
LUFTFAHRZEUG MIT ZWEI GEGENLÄUFIGEN BLÄSERN AM HECK DES RUMPFES UND MIT VERSTELLBAREN SCHAUFELBLÄTTERN DES NACHGELAGERTEN BLÄSERS
AIRCRAFT COMPRISING TWO CONTRA-ROTATING FANS TO THE REAR OF THE FUSELAGE, WITH SPACING OF THE BLADES OF THE DOWNSTREAM FAN

(30) Priorité: 22.07.2015 FR 1556955
(43) Date de publication de la demande: 30.05.2018
(73) Titulaire: Safran Aircraft Engines, 75015 Paris (FR)
(72) Inventeur: GALLET, François, 77550 Moissy-Cramayel Cedex (FR)
(74) Mandataire: Gevers & Orès
(86) Numéro de dépôt international: PCT/FR2016/051888
(87) Numéro de publication internationale: WO 2017/013366

(56) Documents cités:
- WO-A1-2014/023891
- FR-A1- 2 997 681
- GB-A- 2 185 719
- US-A- 4 767 270
- US-A- 4 791 783

## Description

### Domaine de l'invention et état de la technique :

La présente invention se rapporte au domaine des aéronefs tels que des avions, notamment civils, propulsés par une turbomachine à soufflantes contrarotatives, la turbomachine étant intégrée dans le prolongement du fuselage en aval de celui-ci. Elle concerne plus particulièrement les moyens pour adapter les soufflantes dans ce type d'architecture aux différentes conditions d'opération de l'aéronef.

Il a été proposé dans la demande de brevet FR-A1-2 997 681, une nouvelle architecture d'aéronef permettant de réduire les nuisances sonores et la consommation de carburant de l'aéronef en limitant la traînée aérodynamique par absorption de la couche limite.

Dans une telle architecture, un aéronef est propulsé par une turbomachine à soufflantes contrarotatives carénées, la turbomachine étant intégrée à l'arrière du fuselage de l'aéronef. Généralement, la turbomachine comprend deux générateurs de gaz qui alimentent une turbine de puissance ayant deux rotors contrarotatifs pour entraîner deux soufflantes disposées en aval des générateurs de gaz. Les générateurs de gaz ont des entrées d'air latérales distinctes pour alimenter chacun d'eux. En aval des générateurs de gaz, les soufflantes sont disposées dans le prolongement du fuselage de l'aéronef et généralement alimentées par une couronne annulaire reliée à ce dernier, de manière à absorber une partie au moins de la couche limite formée autour du fuselage. Le diamètre des soufflantes est de l'ordre de celui du fuselage dans sa plus grande section. La vitesse de rotation des soufflantes est généralement plus basse que pour des turbomachines classiques, notamment pour que la vitesse en tête d'aube soit subsonique.

Les deux soufflantes, constituent un ensemble à faible taux de compression et fort débit. Il est dans ce cas difficile d'adapter le point de fonctionnement de la soufflante aval en fonction des régimes moteurs et l'on peut se trouver dans certaines conditions de vols avec de faibles marges d'opérabilité pour cette soufflante.

De plus, il faut équiper l'aéronef d'un système d'inversion de poussée de la turbomachine comme par exemple celui divulgué par le document GB 2185 719. Par ailleurs, compte tenu de la disposition de la nacelle entourant les soufflantes, en queue de l'aéronef, il est problématique d'équiper cette nacelle de dispositifs mobiles permettant, de manière connue, soit de modifier la section de sortie, soit de refouler l'air sortant des soufflantes. En effet, on ne trouve à proximité de cette zone aucune structure permettant de reprendre les efforts engendrés sur la nacelle.

La présente invention a pour objet de fournir une solution adaptée au type d'architecture d'aéronef et de propulseur qui vient d'être décrit pour que la soufflante fonctionne de manière optimale aux différentes conditions de vol. Un deuxième objectif de l'invention est que l'on puisse inverser facilement la poussée de la turbomachine dans une telle architecture.

### Exposé de l'invention :

A cet effet, l'invention concerne un aéronef comportant un fuselage et propulsé par une turbomachine à deux soufflantes coaxiales, respectivement amont et aval, entrainées par deux rotors contrarotatifs d'une turbine de puissance, les deux soufflantes et la turbine étant intégrées dans une nacelle à l'aval du fuselage, dans le prolongement de celui-ci, et dans laquelle circule un écoulement d'air, au moins une des soufflantes, et en particulier la soufflante aval, comportant des aubes à calage variable, et dans lequel au moins une couronne d'aubes à calage variable formant un stator est placée en amont de la soufflante amont, les aubes de stator à calage variable et les aubes à calage variable de la soufflante aval étant configurées mutuellement pour orienter l'écoulement d'air dans un premier mode où l'air circule dans la nacelle de l'amont vers l'aval et dans un second mode où l'air est refoulé dans la nacelle vers l'amont.

Les termes amont et aval font référence à l'écoulement des gaz traversant la turbomachine.

Avantageusement, l'invention s'applique en particulier au cas où les deux soufflantes fonctionnent à un régime relativement bas et avec un faible taux de compression ce qui induit des risques de pompages, de décollement ou plus généralement des phénomènes aérodynamiques difficilement contrôlables. Comme évoqué précédemment, de telles soufflantes présentent généralement un diamètre externe sensiblement identique au diamètre le plus élevé du fuselage de l'aéronef.

Les régimes de rotation des soufflantes étant liés à ceux de la turbine, si le régime de rotation de l'une des soufflantes peut être adapté aux conditions de vol, celui de l'autre soufflante ne peut pas être modifié indépendamment pour s'adapter aux variations de conditions de fonctionnement de cette soufflante.

Notamment, le calage variable des aubes de la soufflante aval permet d'adapter le point de fonctionnement de cette soufflante aval au flux sortant de la soufflante amont lorsque le régime de rotation des soufflantes change. De plus, il serait ici difficile de modifier le calage des aubes de la soufflante amont pour des raisons d'encombrement.

Par ailleurs, cette solution est moins complexe et n'a pas d'impact sur le poids de la turbomachine contrairement à une turbomachine dont des portes seraient montées en aval de la tuyère pour réaliser une fonction reverse. En particulier, la combinaison du calage des aubes de stators et des aubes de soufflante aval permet d'orienter l'écoulement du flux ce qui améliore le rendement de la turbomachine.

Avantageusement, un mécanisme entraînant la rotation d'une tige de calage des aubes de la soufflante aval, est installé dans un corps central, situé en aval de la turbine de puissance et entouré par un écoulement primaire traversant la turbine.

De préférence, la turbine de puissance est située sensiblement entre les deux soufflantes.

Avantageusement, au moins une couronne d'aubes formant un stator est placée en amont de la soufflante amont, les aubes de la couronne étant de préférence à calage variable. Cette solution permet, en particulier, d'améliorer l'adaptation de la soufflante amont aux différents régimes d'utilisation.

Avantageusement, le calage des aubes de la soufflante aval peut être réglé jusqu'à ce que cette soufflante refoule l'air vers l'amont, la nacelle étant équipée de moyens permettant à l'air de s'échapper radialement, entre la soufflante amont et la soufflante aval.

Cela permet d'utiliser pour l'inversion de poussée, les mêmes dispositifs de calage des aubes de la soufflante aval que pour l'adaptation de l'opérabilité. De plus, les efforts de poussée inverse sont appliqués essentiellement sur la soufflante et donc retransmis par son axe à la structure de l'aéronef. La nacelle des soufflantes n'est donc pas mécaniquement sollicitée, elle doit simplement être configurée pour laisser passer l'air refoulé par la soufflante.

De préférence, les moyens d'échappement radial de l'air comportent des grilles qui comprennent des profils transversaux s'étendant radialement de l'aval vers l'amont en partant de l'intérieur de la nacelle. Cela permet de mieux guider vers l'amont le flux d'air sortant de la nacelle entre les deux soufflantes.

Avantageusement, les grilles comportent des moyens formant clapet vis-à-vis de la différence entre une pression à l'intérieur de la nacelle et une pression à l'extérieur de la nacelle. Ainsi aucun système de pilotage sophistiqué n'est nécessaire, c'est de manière automatique que les grilles s'ouvrent lors de l'inversion de poussée et se referment lorsque la turbomachine pousse.

Enfin, l'invention concerne plus particulièrement un aéronef dans lequel au moins deux générateurs de gaz alimentent la turbine de puissance, lesdits générateurs de gaz étant alimentés eux-mêmes par des entrées d'air distinctes disposées en périphérie du fuselage de l'aéronef.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
La figure 1 présente une vue schématique en coupe longitudinale de la partie arrière d'un aéronef équipé d'une turbomachine selon l'invention ;
La figure 2 présente une vue schématique en coupe longitudinale de la partie centrale d'une turbomachine selon l'invention, près de l'axe de symétrie, derrière la turbine de puissance ;
La figure 3 présente une vue schématique d'une demi-coupe longitudinale de la partie arrière d'un aéronef équipé d'une turbomachine selon l'invention, en un premier mode de fonctionnement poussée ;
La figure 4 présente une vue schématique d'une demi-coupe longitudinale de la partie arrière d'un aéronef équipé d'une turbomachine selon l'invention, en un second mode de fonctionnement inversion de poussée ;
Les figures 5a et 5b représentent schématiquement le premier et le second mode de fonctionnement de la turbomachine dans lesquels l'écoulement d'air est orienté en fonction du calage des aubes de stator et des aubes de la soufflante aval.

### Description d'un mode de réalisation :

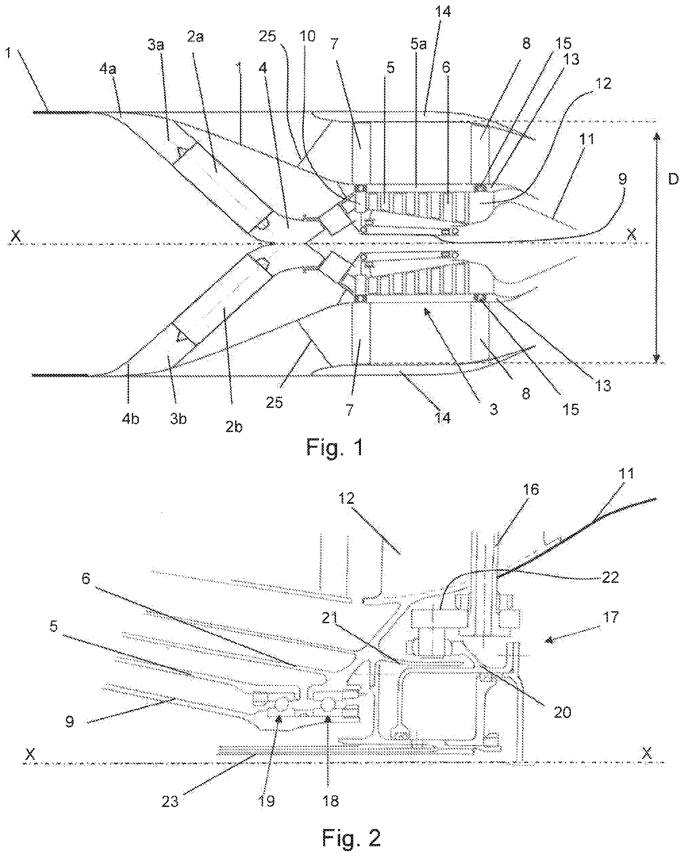

L'invention s'applique en particulier à un aéronef tel qu'un avion comportant une turbomachine du type de celle représentée sur la figure 1.

Comme représenté sur la figure 1, la turbomachine est centrée sur l'axe longitudinal XX du fuselage 1 de l'aéronef. Cette turbomachine comprend, d'amont en aval, dans le sens d'écoulement des gaz, deux générateurs de gaz distincts 2a, 2b alimentant simultanément une unique turbine de puissance 3. La turbomachine est installée à l'extrémité avale du fuselage 1 de l'aéronef.

De façon connue en soi, chaque générateur de gaz 2a, 2b comprend au moins un compresseur, une chambre de combustion et une turbine (non représentés sur les figures).

Chaque générateur de gaz 2a, 2b est logé à l'intérieur d'une veine d'écoulement primaire 3a, 3b. Des entrées d'air distinctes 4a, 4b sont prévues pour ces veines 3a, 3b afin d'alimenter chaque générateur de gaz 2a, 2b. Sur l'exemple présenté, les entrées d'air 4a, 4b sont reliées au fuselage 1 de l'aéronef, en amont des générateurs de gaz 2a, 2b, et leur paroi interne est directement intégrée au fuselage 1. Elles absorbent ainsi une partie de la couche limite formée autour du fuselage 1 de l'aéronef. Dans une autre configuration, non représentée, les entrées d'air latérales alimentant chacun des générateurs de gaz peuvent être, au contraire, écartées du fuselage 1 de l'aéronef, de manière à minimiser ce phénomène d'absorption de la couche limite et à faciliter le fonctionnement des générateurs de gaz. Il est également envisageable d'utiliser plus de deux générateurs de gaz, par exemple trois pour alimenter la turbine de puissance 3.

De préférence, les deux veines d'écoulement primaires 3a, 3b des générateurs de gaz 2a, 2b convergent sur l'axe longitudinal XX et forment entre elles un V ouvert vers l'amont, dont l'angle d'ouverture est de préférence compris entre 80° et 120°.

Les deux veines d'écoulement primaires 3a, 3b des générateurs de gaz 2a, 2b convergent dans une veine primaire centrale 4 qui alimente la turbine de puissance 3. Un mélangeur (non représenté sur les figures) est de préférence positionné au niveau de la zone de convergence des deux veines 3a, 3b, logeant les générateurs de gaz 2a, 2b. Ce mélangeur a pour fonction de mélanger les flux gazeux issus des deux générateurs de gaz 2a, 2b pour créer un flux gazeux unique homogène en sortie de la veine centrale primaire 4.

La turbine de puissance 3, qui est alimentée par ce flux primaire en sortie de la veine centrale 4, est munie de deux rotors 5, 6 de turbine contrarotatifs pour entrainer de façon contrarotative deux soufflantes 7, 8. Ces rotors de turbine 5, 6 sont coaxiaux et centrés sur l'axe longitudinal XX. Ils tournent autour d'un carter central 9 fixé à la structure de l'aéronef.

Ici, un premier rotor 5 de turbine correspond à des aubes liées à un corps tubulaire 5a séparant la veine d'écoulement primaire, dans la turbine de puissance 3, de la veine d'écoulement secondaire, dans laquelle se trouvent les soufflantes 7,8. Les aubes et le corps tubulaire 5a du premier rotor 5 sont reliées aux paliers de support du rotor 5 sur le carter intérieur 9 par des bras support 10 qui traversent la veine primaire en amont de la turbine de puissance 3.

Sur le même exemple, le deuxième rotor 6 correspond à des aubes liées à une paroi radialement intérieure de la veine primaire dans la turbine 3 et intercalées longitudinalement entre les aubes du premier rotor 5.

En aval de la turbine de puissance 3, la partie radialement interne du deuxième rotor 6 se prolonge par un corps central 11. D'autre part, elle est reliée, par des bras support 12, à un anneau 13 de support des aubes de la soufflante aval 8. De plus, cet anneau 13 prolonge le corps tubulaire 5a du premier rotor 5 et comporte une extension vers l'arrière, de façon à former, avec le corps central 11, une tuyère d'éjection primaire, en sortie de la turbine de puissance 3.

Sur l'exemple présenté, une première soufflante 7, amont, est positionnée au niveau de l'entrée de la turbine de puissance 3. Elle est reliée au premier rotor 5 au niveau des bras 10 qui soutiennent en amont le corps extérieur cylindrique 5a. Cette soufflante amont 7 tourne donc à la même vitesse que le premier rotor 5 de la turbine de puissance 3.

Sur le même exemple, la deuxième soufflante 8, aval, est positionnée au niveau de la sortie de la turbine de puissance 3. Elle est reliée au deuxième rotor 6 au niveau de l'anneau de support 13 et des bras 12 qui le soutiennent. Cette soufflante aval 8 tourne donc à la même vitesse que le deuxième rotor 6 de la turbine de puissance 3.

Les deux soufflantes 7, 8 sont carénées par une nacelle 14 fixée à la structure de l'aéronef. Cette nacelle 14 est notamment fixée, ici, à l'empennage vertical de l'aéronef, non représenté sur les figures. Les soufflantes présentent un diamètre externe D qui correspond sensiblement au diamètre externe le plus élevé du fuselage 1 de l'aéronef.

L'air entrant dans les soufflantes 7, 8 étant en partie composé de la couche limite du fuselage de l'aéronef, la vitesse en entrée est peu élevée par rapport à des soufflantes classiques de turbomachine et la vitesse en sortie est également plus basse à taux de compression identique, ce qui améliore les performances propulsives et acoustiques de ces soufflantes. Par ailleurs, l'important diamètre externe D des soufflantes 7, 8 entraîne que leur vitesse de rotation, comme celle des rotors 5, 6 de la turbine de puissance 3, restera également peu élevée par rapport à une turbomachine classique.

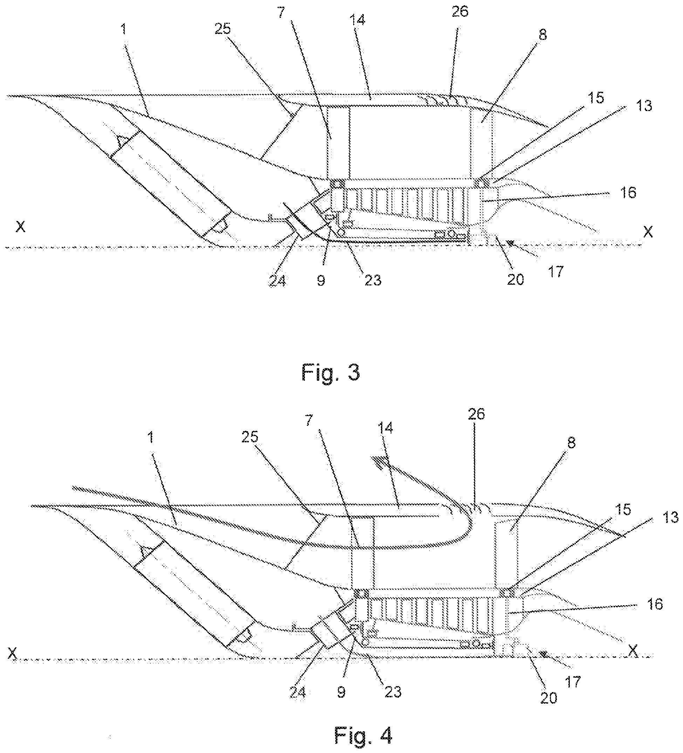

Selon un premier aspect de l'invention, les aubes de la soufflante aval 8 sont montées avec un dispositif permettant de faire varier leur calage angulaire par rapport à un plan méridien vis-à-vis de l'axe longitudinal XX. Pour cela, en référence à la figure 1, elles sont montées ici avec un système de bagues à roulement 15 sur l'anneau 13 de support et tournent chacune autour d'une tige radiale 16 (représentée sur les figures 2 et 3) qui traverse un bras support 12 de l'anneau 13. Les aubes de la soufflante aval peuvent occuper une infinité de positions.

En référence à la figure 2, les tiges radiales 16 des aubes sont actionnées en rotation par un dispositif 17 à biellettes près de l'axe longitudinal XX. On peut voir sur la figure 2, l'arrière du carter central 9 supportant un premier palier 18 pour le second rotor 6 juste derrière un deuxième palier 19 pour le premier rotor 5. Le dispositif 17 comporte une partie cylindrique 20 mobile en translation selon l'axe longitudinal XX dans un logement 21 du deuxième rotor 6. Pour chaque aube de la soufflante aval 8, la partie mobile 20 est reliée à une biellette 22, elle-même solidaire de la tige radiale 16 de l'aube. Par son mouvement de translation, la partie mobile 20 entraîne chaque biellette 22 fixée à la tige radiale 16 d'une aube et fait tourner cette tige 16 autour de son axe. La tige 16 entraîne ensuite l'aube correspondante en rotation dans les bagues de roulement sur l'anneau de support 13. L'ensemble du dispositif 17 est logé, de manière compacte, dans le corps central 11, juste en aval du palier 18 de roulement du second rotor 6 de la turbine et sous la couronne de bras support 12.

Par ailleurs, le mouvement de translation de la partie mobile 20 peut être commandé par un système de tringles 23 passant à l'intérieur du carter central 9. Ces tringles 23 peuvent être actionnées par des actuateurs (non représentés sur les figures) placés à l'intérieur du fuselage 1 de l'aéronef, en amont de la turbine de puissance 3.

Dans un premier mode de fonctionnement, ou mode poussée, représenté sur la figure 3, la turbomachine est utilisée pour propulser l'aéronef. Ce dispositif 17 peut être utilisé pour ajuster le calage des aubes de la soufflante aval 8 en fonction du régime de la turbomachine.

Sur la figure 3, la partie mobile en translation 20 du dispositif 17 est rappelée vers l'amont par les tringles 23, dans une position correspondant, par exemple à un calage des aubes de la soufflante aval 8 correspondant à une situation de vol de croisière. Avantageusement, les tringles 23 passent par des bras 24 supportant le carter central 9 et sont actionnées par des moyens, non représentés, à l'intérieur du fuselage 1 de l'aéronef.

Sur l'exemple présenté dans les figures 1 et 3, la turbomachine comprend en outre un stator 25, formé d'une couronne d'aubes reliant la nacelle 14 au fuselage 1 en amont de la soufflante amont 7. Avantageusement, des moyens, non représentés sur les figures, permettent de faire varier le calage des aubes de ce stator 25.

De cette manière, le stator 25 permet d'adapter le fonctionnement de la soufflante amont 7 à différents régimes moteur en agissant sur l'écoulement incident. Cela palie au fait que l'encombrement au niveau de la soufflante amont 7 peut rendre difficile l'installation d'un dispositif de calage de ses aubes.

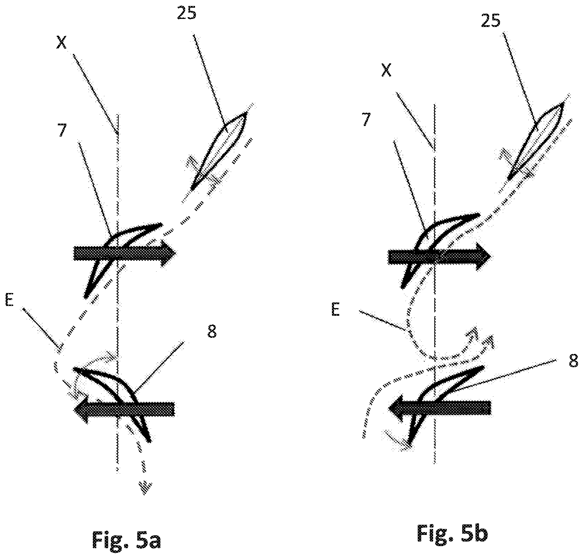

En particulier, comme cela est visible sur les figures 5a et 5b, il est possible d'ajuster le fonctionnement de la soufflante avec les stators à calage variable. Sur la figure 5a est représentée schématiquement en vue de dessus la turbomachine en mode de fonctionnement poussée. L'aube des soufflantes amont et aval 7, 8 ainsi que l'aube de stator 25 sont orientées de manière à générer un écoulement E vers l'aval (soit du haut vers le bas sur cette figure), sans perturbations. Dans ce cas, la position de l'aube de stator varie de manière à faire varier l'incidence de l'écoulement sur les aubes de la soufflante amont 7 laquelle est fixe. Les aubes de la soufflante aval 8 peuvent occuper une infinité de positions comprises entre +60° et -30° par rapport à l'axe X en fonction de la position de l'aube de stator 25. En d'autres termes, on module conjointement les positions des aubes de stator 25 et celles de la soufflante aval pour favoriser au mieux l'écoulement du flux secondaire.

Sur la figure 5b, la turbomachine est schématiquement représentée en un second mode de fonctionnement inversion de poussée. Dans le cadre de ce mode, la soufflante amont 7 est toujours fixe. L'aube de la soufflante aval 8 est positionnée de manière à repousser le flux d'air vers l'amont et en particulier à travers la grille 26. En particulier, l'aube de stator 25 oriente l'écoulement du flux d'air vers l'aube de soufflante amont de manière que celle-ci oriente également l'écoulement pour être repoussée par l'aube de soufflante aval facilement.

Ainsi cette solution est moins complexe et n'impacte pas le poids de la turbomachine contrairement à une turbomachine dont des portes seraient montées en aval de la tuyère pour réaliser une fonction inversion de poussée. En particulier, la combinaison du calage des aubes de stators et des aubes de soufflante aval permet d'orienter l'écoulement du flux ce qui améliore le rendement de la turbomachine.

Selon un autre aspect de l'invention, illustré sur la figure 4, le débattement longitudinal de la partie mobile 20 du dispositif 17 est ici suffisant pour faire tourner les aubes de la soufflante aval 8 d'un angle suffisant autour de l'axe de leur tige 16 pour qu'elles repoussent l'écoulement vers l'amont. La figure 4 illustre un cas où la position des aubes est inversée par rapport à l'écoulement incident.

En correspondance avec cette configuration, la nacelle 14 comporte des ouvertures munies de grilles 26 en amont de la turbine aval. L'air refoulé par la soufflante aval 8 peut ainsi s'échapper vers l'amont par les grilles 26 et créer une contre-poussée pour freiner l'aéronef.

Pour guider efficacement l'air vers l'amont et amplifier cet effet, les parties transversales des grilles comportent ici, comme représenté sur la figure 4, des plaques qui s'étendent radialement de l'aval vers l'amont à partir de l'intérieur de la nacelle 14.

En référence à la figure 3, les ouvertures des grilles 26 sont bouchées lorsque la turbomachine fonctionne en mode propulsion. Les moyens contrôlant l'ouverture et la fermeture des grilles 26, non détaillés sur les figures, peuvent être pilotés ou automatiques. Des moyens pilotés peuvent comprendre par exemple des plaques qui glissent le long de la nacelle 14 suivant le mode de fonctionnement choisi. Des moyens automatiques peuvent comprendre des systèmes de type clapet, avec un rappel élastique pour boucher les ouvertures des grilles 26 si la différence de pression entre l'intérieur et l'extérieur de la nacelle 14 n'est pas assez forte.

De cette manière, une turbomachine équipée d'un système de calage variable des aubes de la soufflante aval 8, tel qu'il vient d'être décrit, peut utiliser ce système à la fois pour adapter le fonctionnement des soufflantes lors des phases de propulsion et pour inverser la poussée.

## Revendications

1. Aéronef comportant un fuselage (1) et propulsé par une turbomachine à deux soufflantes coaxiales, respectivement amont (7) et aval (8), entrainées par deux rotors (5, 6) contrarotatifs d'une turbine de puissance (3), les deux soufflantes (7, 8) et la turbine (3) étant intégrées dans une nacelle (14) à l'aval du fuselage (1), dans le prolongement de celui-ci, et dans laquelle circule un écoulement d'air aéronef **caractérisé en ce qu'**au moins une des soufflantes (7, 8), et au moins la soufflante aval (8), comporte des aubes à calage variable et dans lequel au moins une couronne d'aubes (25) à calage variable formant un stator est placée en amont de la soufflante amont (7), les aubes de stator (25) à calage variable et les aubes à calage variable de la soufflante aval (8) étant configurées mutuellement pour orienter l'écoulement d'air dans un premier mode où l'air circule dans la nacelle (14) de l'amont vers l'aval et dans un second mode où l'air est refoulé dans la nacelle (14) vers l'amont.

2. Aéronef selon la revendication précédente, dans lequel un mécanisme (17) entraînant la rotation d'une tige (16) de calage des aubes de la soufflante aval (8) est installé dans un corps central (11), situé en aval de la turbine de puissance (3) et entouré par un écoulement primaire traversant la turbine (3).

3. Aéronef selon la revendication 1 ou 2, dans lequel la turbine de puissance (3) est située sensiblement entre les deux soufflantes.

4. Aéronef selon l'une quelconque des revendications précédentes, dans lequel le calage des aubes de la soufflante aval (8) peut être réglé jusqu'à ce que cette soufflante (8) refoule l'air vers l'amont, la nacelle (14) étant équipée de moyens permettant à l'air de s'échapper radialement, entre la soufflante amont (7) et la soufflante aval (8).

5. Aéronef selon la revendication précédente, dans lequel les moyens d'échappement radial de l'air comportent des grilles (26) qui comprennent des profils transversaux s'étendant radialement de l'aval vers l'amont en partant de l'intérieur de la nacelle (14).

6. Aéronef selon la revendication précédente, dans lequel les grilles (26) comportent des moyens formant clapet vis-à-vis de la différence entre une pression à l'intérieur de la nacelle (14) et une pression à l'extérieur de la nacelle (14).

7. Aéronef selon l'une quelconque des revendications précédentes, dans lequel au moins deux générateurs de gaz (2a, 2b) alimentent la turbine de puissance (3), lesdits générateurs étant alimentés eux-mêmes par des entrées d'air (4a, 4b) distinctes disposées en périphérie du fuselage (1) de l'aéronef.

## Patentansprüche

1. Luftfahrzeug, einen Rumpf (1) beinhaltend, und durch eine Turbomaschine mit zwei koaxialen, jeweils vorgelagerten (7) und nachgelagerten (8) Lüftern angetrieben, die durch zwei gegenläufige Rotoren (5, 6) einer Leistungsturbine (3) angetrieben werden, wobei die beiden Lüfter (7, 8) und die Turbine (3) in einer Gondel (14), dem Rumpf (1) nachgelagert, in der Verlängerung desselben integriert sind, und in der eine Luftströmung des Luftfahrzeugs zirkuliert, Luftfahrzeug **dadurch gekennzeichnet, dass** mindestens einer der Lüfter (7, 8) und mindestens der nachgelagerte Lüfter (8) Schaufeln mit variablen Verstellen beinhaltet, und wobei mindestens ein Schaufelkranz (25) mit variablen Verstellen, der einen Stator bildet, vorgelagert zum vorgelagerten Lüfter (7) platziert ist, die Statorschaufeln (25) mit variablen Verstellen und die Schaufeln mit variablen Verstellen des nachgelagerten Lüfters (8) gegenseitig konfiguriert sind, um die Luftströmung in einem ersten Modus, in dem die Luft in der Gondel (14) zirkuliert von vorgelagert zu nachgelagert, und in einem zweiten Modus, in dem die Luft in der Gondel (14) umgewälzt wird, nach vorgelagert auszurichten.

2. Luftfahrzeug nach dem vorstehenden Anspruch, wobei ein Mechanismus (17), der die Drehung einer Stange (16) zur Verstellen der Schaufel des nachgelagerten Lüfters (8) antreibt, in einem zentralen Körper (11), der sich nachgelagert zu der Leistungsturbine (3) befindet und durch eine Primärströmung umgeben ist, die die Turbine (3) durchquert, installiert ist.

3. Luftfahrzeug nach Anspruch 1 oder 2, wobei sich die Leistungsturbine (3) im Wesentlichen zwischen den beiden Lüftern befindet.

4. Luftfahrzeug nach einem der vorstehenden Ansprüche, wobei die Verstellen der Schaufeln des nachgelagerten Lüfters (8) eingestellt werden kann, bis dieser Lüfter (8) die Luft nach vorgelagert umwälzt, wobei die Gondel (14) mit Mitteln ausgerüstet ist, die es der Luft ermöglichen, zwischen dem vorgelagerten Lüfter (7) und dem nachgelagerten Lüfter (8) radial zu entweichen.

5. Luftfahrzeug nach dem vorstehenden Anspruch, wobei die Mittel zum radialen Entweichen der Luft Gitter (26) beinhalten, die Querprofile umfassen, die sich, ausgehend vom Inneren der Gondel (14), radial von nachgelagert zu vorgelagert erstrecken.

6. Luftfahrzeug nach dem vorstehenden Anspruch, wobei die Gitter (26) Mittel beinhalten, die eine Klappe gegenüber der Differenz zwischen einem Druck im Inneren der Gondel (14) und einem Druck außerhalb der Gondel (14) bilden.

7. Luftfahrzeug nach einem der vorstehenden Ansprüche, wobei mindestens zwei Gasgeneratoren (2a, 2b) die Leistungsturbine (3) versorgen, wobei die Generatoren selbst durch unterschiedliche Lufteingänge (4a, 4b) versorgt werden, die an der Peripherie des Rumpfes (1) des Luftfahrzeugs angeordnet sind.

## Claims

1. Aircraft comprising a fuselage (1) and being propelled by a turbine engine with two coaxial fans, respectively upstream (7) and downstream (8), driven by two contra-rotating rotors (5, 6) of a power turbine (3), the two fans (7, 8) and the turbine (3) being integrated in a nacelle (14) downstream of the fuselage (1), in the extension thereof, and in which an air flow circulates, which aircraft is **characterised in that** at least one of the fans (7, 8), and at least the downstream fan (8), comprises variable-pitch vanes and wherein at least one ring of variable-pitch vanes (25) forming a stator is placed upstream of the upstream fan (7), the variable-pitch stator vanes (25) and the variable-pitch vanes of the downstream fan (8) being mutually configured to orient the air flow in a first mode where the air circulates in the nacelle (14) in the upstream to downstream direction and in a second mode where the air is pushed back upstream through the nacelle (14).

2. Aircraft according to the preceding claim, wherein a mechanism (17) for rotating a pitch rod (16) for the vanes of the downstream fan (8) is installed in a central body (11), located downstream of the power turbine (3) and surrounded by a primary flow passing through the turbine (3).

3. Aircraft according to claim 1 or claim 2, wherein the power turbine (3) is located substantially between the two fans.

4. Aircraft according to any of the preceding claims, wherein the pitch of the vanes of the downstream fan (8) can be adjusted so that this fan (8) pushes back the air upstream, the nacelle (14) being equipped with means that allow the air to be discharged radially, between the upstream fan (7) and the downstream fan (8).

5. Aircraft according to the preceding claim, wherein the means for radially discharging air comprise screens (26) that comprise transverse profiles extending radially in the downstream to upstream direction starting from the inside of the nacelle (14).

6. Aircraft according to the preceding claim, wherein the screens (26) comprise means forming a valve with regard to the difference between a pressure inside the nacelle (14) and a pressure outside the nacelle (14).

7. Aircraft according to any of the preceding claims, wherein at least two gas generators (2a, 2b) supply the power turbine (3), said generators themselves being supplied by distinct air intakes (4a, 4b) disposed on the periphery of the fuselage (1) of the aircraft.
